# EUROPÄISCHE PATENTANMELDUNG

(11) **EP 2 468 974 A2**
(43) Veröffentlichungstag der Anmeldung: **27.06.2012**
(21) Anmeldenummer: 11193472.5
(22) Anmeldetag: 14.12.2011
(51) Int. Cl.: E04B 9/04, F24D 3/16, F24F 5/00

(54) **Plattenaufbau für ein Heiz- bzw. Kühlelement**

(30) Priorität: 21.12.2010 DE 202010016876 U
(71) Anmelder: GiB Gesellschaft für innovative Bautechnologie mbH, 94424 Arnstorf (DE)
(72) Erfinder: Weber, Martin, 94424 Arnstorf (DE)
(74) Vertreter: Klingseisen, Franz

(57) **Zusammenfassung**

Aufbau für ein Heiz- bzw. Kühlelement, insbesondere für eine Klimadecke, umfassend eine perforierte, Wärme leitende Trägerplatte (1), auf deren Rückseite Leitungen (3) eines Heiz-oder Kühlregisters verlaufen, die in Wärmeleitkontakt mit der Trägerplatte (1) stehen, dadurch gekennzeichnet, dass die Rückseite der Trägerplatte (1) und die Heiz- bzw. Kühlleitungen (3) von einer Abdeckbahn (4) überdeckt sind, die eine textile oder gitterförmige Struktur hat und aus einem Wärme leitenden Material besteht oder mit einem Wärme leitenden Material beschichtet ist.

## Beschreibung

Die Erfindung betrifft einen Plattenaufbau insbesondere für eine Klimadecke, bei der Flächenelemente aus einem Wärme leitenden Trägermaterial mit einem Heiz- bzw Kühlregister versehen sind.

Bei derartigen Klimadecken wird in der Regel eine perforierte Trägerplatte vorgesehen, auf deren Rückseite ein Heiz- bzw. Kühlregister angeordnet ist, wobei zur Wärmeübertragung von den Heiz- bzw Kühlleitungen auf die perforierte Trägerplatte Wärmeleitprofile vorgesehen sind, die sich längs der Leitungen erstrecken, die perforierte Trägerplatte in dem Zwischenraum zwischen den Leitungen aber nicht abdecken, um die Schall absorbierende Wirkung der perforierten Trägerplatte nicht zu beeinträchtigen.

Mit der exfindungsgemäßen Ausgestaltung soll eine Verbesserung der Wärmeübertragung bei solchen Heiz- bzw Kühlelementen erreicht werden.

Erfindungsgemäß wird auf der Rückseite einer perforierten Trägerplatte, z. B. einer gelochten Gipskartonplatte oder einer entsprechenden Wärme leitenden, Schall transparenten Trägerplatte eine gut Wärme leitende und weitgehend schalltransparente Abdeckbahn so aufgelegt, dass die Abdeckbahn die Heiz- bzw Kühlleitungen mit abdeckt Die Abdeckbahn hat vorzugsweise eine textile oder gitterförmige Struktur, sodass sie leicht verformbar ist und an die Kontur der Heiz- bzw. Kühlleitungen leicht angepasst werden kann,

Durch die über die gesamte Fläche dicht anliegende, gut Wärme leitende Abdeckbahn wird die Wärmeübertragung und vor allem die Wärmeverteilung von den Leitungen auf die perforierte Trägerplatte verbessert. Durch die textile oder gitterförmige Struktur der Abdeckbahn wird auch die Schall absorbierende Wirkung einer perforierten Trägerplatte verbessert, weil der durch die Perforation der Trägerplatte eindringende Schall nicht reflektiert wird, sondern die akustisch transparente Abdeckbahn durchdringt und in einer darüber liegenden Schicht aus schallschluckendem Material wie z.B. Akustikvliese, Mineralwolle, etc. absorbiert wird.

Die Erfindung wird beispielsweise anhand der Zeichnung näher erläutert Es zeigen
- Fig 1: einen schematischen Querschnitt durch ein Deckenelement mit einer textilen Abdeckbahn,
- Fig. 2: schematisch den Aufbau einer Ausführungsform der Abdeckbahn,
- Fig. 3: einen Querschnitt durch eine weitere Ausführungsform eines Flächenelementes, und
- Fig. 4: im Querschnitt eine weitere Ausgestaltung mit einer Wärme isolierenden Abdeckung der Abdeckbahn

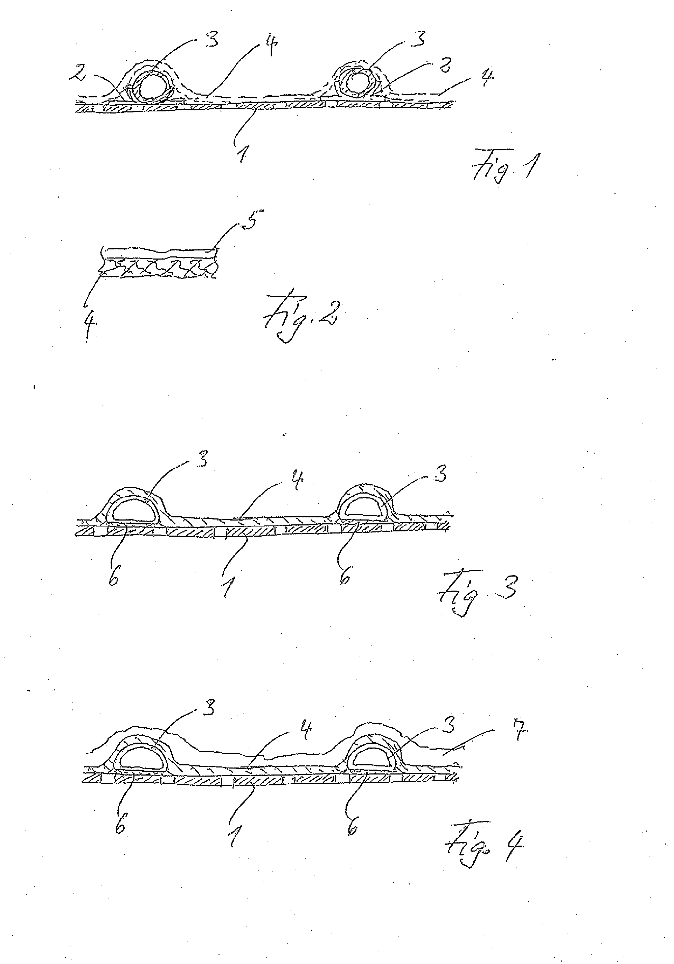

In Fig. 1 ist mit 1 eine Trägerplatte in Form einer perforierten oder glatten Metall- bzw. Gipskartonplatte bezeichnet, wie sie üblicherweise für Deckenelemente einer Klimadecke verwendet wird Auf der Rückseite der Trägerplatte 1 sind beabstandete Wärmeleitprofile 2 über einen Flächenabschnitt mit der Trägerplatte 1 verbunden, wobei Wärmeleitprofile 2 über ein Halbkreisprofil eine Heiz- bzw. Kühlleitung 3 eines Heiz- bzw Kühlregisters aufnehmen. Dieser Aufbau eines Deckenelementes ist an sich bekannt

Erfindungsgemäß wird bei einem solchen Aufbau eine gut Wärme leitende, vorzugsweise textile Abdeckbahn 4 über das Heiz- bzw Kühlregister und die Rückseite der Trägerplatte 1 so aufgelegt, dass die Abdeckbahn 4 die Leitungen 3 dicht anliegend umschließt und zwischen den Leitungen 3 vollflächig auf der Trägerplatte 1 aufliegt Durch die textile oder gitterförmige Struktur der Abdeckbahn 4 ist diese schalltransparent und leicht verformbar, sodass die Abdeckbahn 4 gut an die Kontur der Rückseite des Deckenelementes angepasst werden kann

Die Abdeckbahn 4 kann z. B aus einem Gewebe auf Kupfer- oder Aluminiumbasis bestehen. Anstelle einer Gewebestruktur ist auch eine Gitterstruktur möglich, die leicht verformbar ist, damit sie an die Kontur auf der Rückseite des Deckenelementes leicht angepasst werden kann

Anstelle eines Metallgewebes oder Metallvlieses kann auch ein Graphitvlies verwendet werden Weiterhin kann die Abdeckbahn 4 aus einer gelochten, Wärme leitenden Folie ausgebildet sein.

Anstelle eines Gitters oder Gewebes aus Metall kann als Abdeckbahn 4 auch ein z B. aus Graphit bestehendes bzw mit Graphit beschichtetes Vlies Verwendung finden.

Nach einer weiteren Ausführungsform kann auf' einem Metallgewebe oder einem Metallgitter als Abdeckbahn 4 zusätzlich ein Vlies 5 aufgelegt sein, das aus Graphit besteht oder mit Graphit oder mit einem anderen gut Wärme leitenden Material beschichtet ist, wie dies Fig. 2 schematisch zeigt.

Zur Verbesserung der Wärmeübertragung kann die Gewebe- bzw. Gitterstruktur der Abdeckbahn 4 mit Graphit oder einer anderen die Wärmeübertragung verbessernden Beschichtung versehen sein.

Auf der Rückseite der Abdeckbahn 4 kann ein Akustikvlies ähnlich dem Vlies 5 in Fig 2 auflaminiert sein, um die Schall absorbierende Wirkung der schalltransparenten Abdeckbahn 4 zu verbessern Es ist auch möglich, auf der der Trägerplatte zugewandten Seite der Abdeckbahn eine Vliesbeschichtung vorzusehen

Die Verbindung zwischen der gut Wärme leitenden Abdeckbahn 4 und der Trägerplatte 1 kann mittels eines Dünnschicht-Schmelzklebers, Sprühklebers und dergleichen hergestellt werden. Es ist aber auch eine mechanische Verbindung wie z. B. durch einen mechanischen Niederhalter, oder durch Verlöten eines metallischen Gewebes mit der Trägerplatte möglich.

Vorzugsweise wird eine flächige Verbindung zwischen Abdeckbahn 4 und Trägerplatte 1 vorgesehen, um über die gesamte Fläche einen guten Wärmeleitkontakt herzustellen. Es ist aber auch möglich, abschnitts-, punkt- bzw. streifenweise eine Verbindung zwischen Abdeckbahn 4 und Trägerplatte 1 vorzusehen. Auch ist eine formschlüssige Verbindung möglich, wenn auf der Rückseite der Trägerplatte 1 entsprechende Noppen oder dergleichen Elemente ausgebildet sind, an denen die Abdeckbahn 4 fixiert werden kann.

Fig. 3 zeigt eine bevorzugte Ausführungsform mit abgeflachten Metallleitungen 3, die vorzugsweise aus Kupfer bestehen und mit der flachen Seite auf der Trägerplatte 1 aufliegen Zur Verbindung zwischen den Leitungen 3 und der Trägerplatte 1 kann ein Dünnschicht-Schmelzkleber 6, ein Wärmeleitkleber oder auch ein mechanischer Niederhalter z. B. in Form eines Federbügels vorgesehen sein. Es ist auch eine Löt- oder Schweißverbindung möglich

Zweckmäßigerweise werden die abgeflachten Leitungen 3 auf der Außenseite matt schwarz beschichtet, um die Wärmeübertragung zur Abdeckbahn 4 zu verbessern

Durch die abgeflachten Leitungen 3 wird die Kontur auf der Rückseite des Deckenelementes flacher gestaltet, damit die Abdeckbahn 4 möglichst vollflächig anliegen kann.

Es sind verschiedene Abwandlungen der beschriebenen Bauform möglich. So kann auf der Rückseite der Abdeckbahn 4 beispielsweise eine Mineralwollschicht aufgelegt werden

Für die Abdeckbahn 4 kann auch eine leicht verformbare, schalltransparente Bahn verwendet werden, die selbst nicht Wärme leitend ist, auf der Auflageseite aber mit einer gut Wärme leitenden, schalltransparenten Beschichtung versehen ist, mit der sie auf den Leitungen 3 und zwischen den Leitungen 3 auf der Trägerplatte 1 aufliegt.

Die gut Wärme leitende Abdeckbahn 4 mit einer textilen Struktur oder einer Gitterstruktur verbessert die Wärmeverteilung von den Heiz- bzw. Kühlleitungen 3 über die Fläche der Trägerplatte 1 und sie verbessert aufgrund ihrer akustisch transparenten Struktur auch die Schallabsorption eines solchen Deckenelementes, wobei die leichte Verformbarkeit einer solchen Abdeckbahn 4 die Herstellung eines solchen Deckenelementes erleichtert.

Der beschriebene Aufbau mit einer perforierten Trägerplatte 1 als stabilem Träger kann nicht nur für Deckenelemente eingesetzt werden, sondern auch für Verkleidungszwecke an Wänden und dergleichen Wärme abstrahlenden Flächenbereichen.

Fig 4 zeigt schematisch eine Ausführungsform, bei der auf der Abdeckbahn 4 eine Lage 7 aus Vlies, Mineralwolle oder dergleichen Wärme isolierendem und/oder Schall absorbierendem Material aufgebracht ist Anstelle einer solchen Lage 7 kann auch ein dickeres Material zur Wärmeisolation auf der Abdeckbahn 4 lose aufgelegt sein. Es ist auch möglich, eine Isolierschicht 7 aufzuschäumen

## Patentansprüche

1. Aufbau für ein Heiz- bzw Kühlelement, insbesondere für eine Klimadecke, umfassend eine perforierte, Wärme leitende Trägerplatte (1), auf deren Rückseite Leitungen (3) eines Heiz- oder Kühlregisters verlaufen, die in Wärmeleitkontakt mit der Trägerplatte (1) stehen,
**dadurch gekennzeichnet,**
**dass** die Rückseite der Trägerplatte (1) und die Heiz- bzw. Kühlleitungen (3) von einer Abdeckbahn (4) überdeckt sind, die eine textile oder gitterförmige Struktur hat und aus einem Wärme leitenden Material besteht oder mit einem Wärme leitenden Material beschichtet ist

2. Aufbau nach Anspruch 1, wobei die Abdeckbahn (4) aus einem Metallgewebe besteht

3. Aufbau nach Anspruch 1, wobei die Abdeckbahn (4) aus einem Graphitvlies besteht

4. Aufbau nach Anspruch 1, wobei die Abdeckbahn (4) mit einer gut Wärme leitenden Beschichtung auf der Anlageseite der Abdeckbahn versehen ist.

5. Aufbau nach einem der vorhergehenden Ansprüche, wobei die Leitungen (3) eine abgeflachte Querschnittsform haben und mit der flachen Seite auf der Trägerplatte (1) anliegen.

6. Aufbau nach Anspruch 5, wobei die abgeflachte Seite der Leitungen (3) mittels eines Dünnschicht-Schmelzklebers (6) oder eines Wärmeleitklebers oder auch durch mechanische Niederhalter mit der Trägerplatte (1) verbunden sind.

7. Aufbau nach einem der vorhergehenden Ansprüche, wobei auf der Abdeckbahn (4) eine Lage (7) aus Wärme isolierendem und/oder Schall absorbierendem Material aufgebracht ist

8. Aufbau nach einem der vorhergehenden Ansprüche, wobei auf der Abdeckbahn (4) ein akustisch wirksames Vlies auflaminiert ist, um die Schall absorbierende Wirkung der schalltransparenten Abdeckbahn (4) zu verbessern
